# EUROPEAN PATENT APPLICATION

(11) **EP 0 889 384 A1**
(43) Date of publication of application: **07.01.1999**
(21) Application number: 98305330.7
(22) Date of filing: 03.07.1998
(51) Int. Cl.: G05G 1/14, B60K 26/02

(54) **Support for control pedals**

(30) Priority: 03.07.1997 GB 9714062
(71) Applicant: DRAFTEX INDUSTRIES LIMITED, Edinburgh EH2 3AP, Scotland (GB)
(72) Inventor: Beurrier, Jean-Maurice, 44100 Nantes (FR)
(74) Representative: Foster, David Martyn

(57) **Abstract**

A pedal support for supporting the clutch and/or brake and/or other pedal in a motor vehicle is moulded from plastics material and is in two parts (10,12). Each support part is in the form of an open-faced box (16,64) surrounded by a respective flange (15,62). In use, the two parts are secured together and attached to the periphery of an opening formed in the bulkhead wall between the passenger compartment (6) and the engine compartment (8) of the vehicle by means of suitable fixing screws passing through metal inserts in the flanges (15,62). The support part (10) mounted within the passenger compartment carries one or more mounting brackets (20,22) for pivotally supporting the pedals, and the actuating rod from each pedal passes through holes (34,70,46,72,78) in the two parts into the engine compartment (8). Because the support is made in two separate parts, each can be moulded from material suitable for the particular environmental conditions and temperatures to which it will be subjected, thus enabling cost reduction. Sound insulation material, of different forms (100A,100B), is placed within the two parts (10,12). The support part (12) in the engine compartment (8) has a mounting collar (79) for carrying a brake servo unit.

## Description

The invention relates to supports for control pedals. Embodiments of the invention to be described in more detail below, by way of example only, are for supporting control pedals in motor vehicles, such as for supporting the clutch pedal and/or the brake pedal, and possibly the accelerator pedal.

According to the invention, there is provided a support for mounting at least one control pedal, the support being made in two parts from plastics material, the first part carrying pedal supporting means for movably supporting the control pedal, the two parts being adapted to be secured together and on a mount.

According to the invention, there is further provided a pedal support for supporting a clutch and/or brake pedal of a motor vehicle, comprising a first support part moulded from plastics material and defining a shallow open-faced box with bracket means integrally carried on the outside of the face of the box opposite its open face, the bracket means being adapted for pivotally supporting the or each pedal, a second support part made of plastics material and defining a shallow open-faced box, securing means for securing the two parts together and also to an opening in a wall between the passenger and engine compartments of the vehicle so that the first support part is within the passenger compartment and the second support part is within the engine compartment and the open faces of the two boxes come together to define a hollow chamber generally aligned with and substantially filling the opening in the wall, matchingly aligned holes through the two support parts for receiving a control rod actuated by the or each pedal and which passes through both parts into the engine compartment, and sound insulating material substantially filling the hollow chamber.

Pedal supports embodying the invention, for use in motor vehicles, will now be described, by way of example only, with reference to the accompanying diagrammatic drawings in which:-
Figure 1 is a diagrammatic general side view of one of the pedal supports;
Figure 2 is a perspective view of an upper part of the support;
Figure 3 is a perspective view of a lower part of the support;

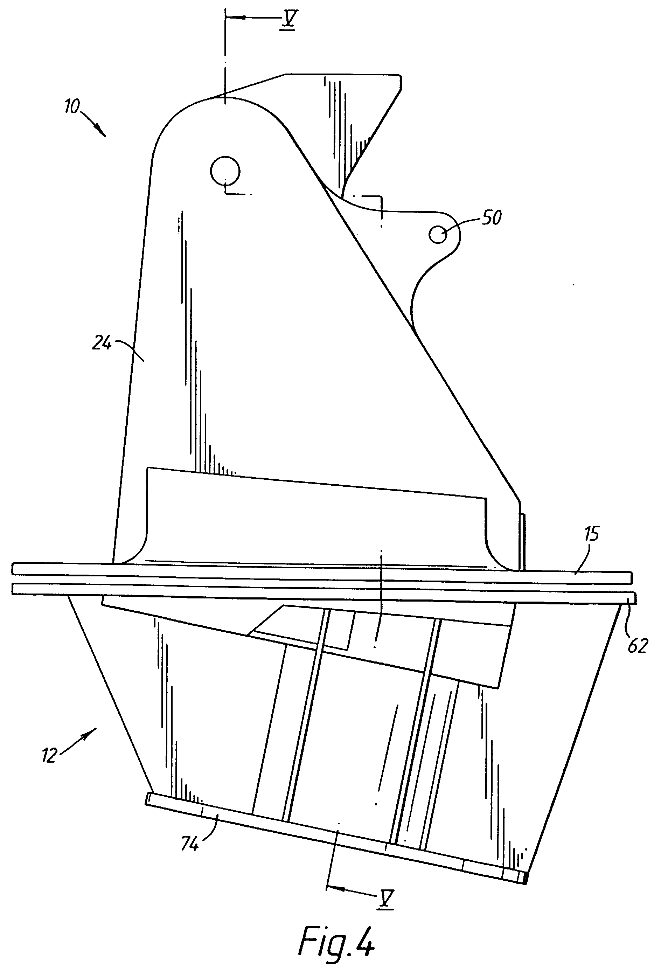

Figure 4 is a side view showing the upper and lower parts assembled together;
Figure 5 is a section on the line V-V of Figure 4;

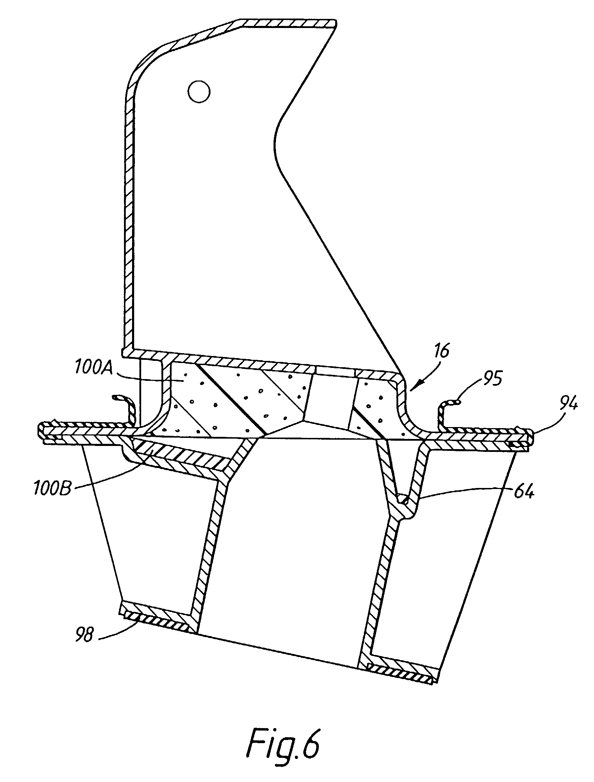

Figure 6 is a section on the line VI-VI of Figure 5;
Figure 7 is a scrap section of part of the two support parts assembled together and fitted to a bulkhead wall in the vehicle; and
Figures 8 and 9 are scrap sections showing a seal fitted to the lower support part.

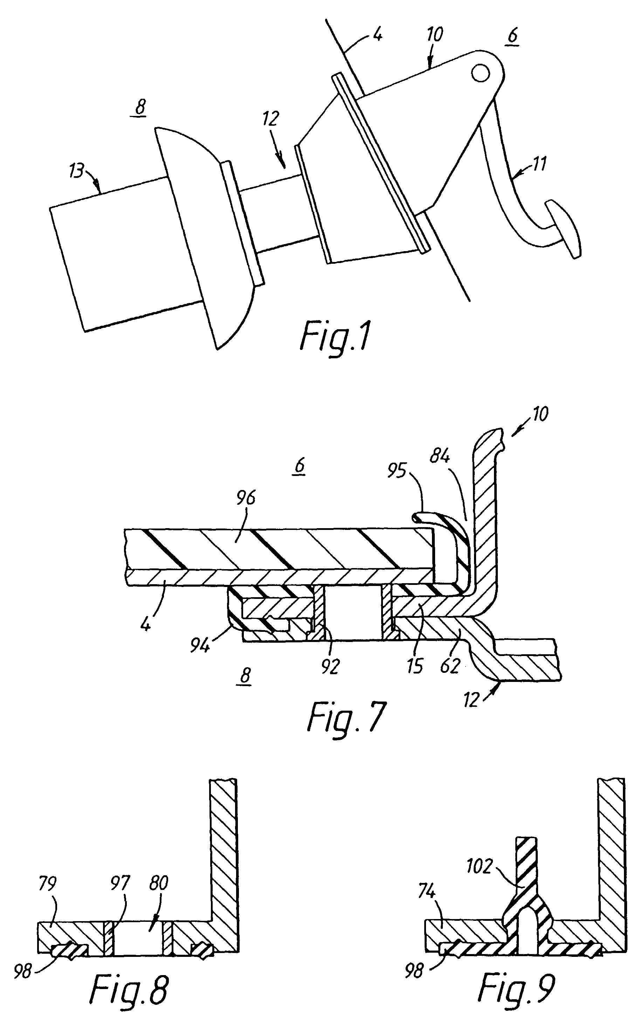

The pedal support to be described in more detail is produced by moulding from suitable plastics material. As will be described in more detail below, it comprises two separate parts (see Figure 1) which are joined together and are mounted on the bulkhead wall 4 of the vehicle between the passenger compartment 6 and the engine compartment 8, with one part situated in the passenger compartment 6 and the other in the engine compartment 8. The two parts are sealingly attached to each other and sealingly supported around a suitable opening in the bulkhead wall 4. The two parts comprise an upper part 10 pivotally supporting the pedals 11 and a lower part 12 connected to a unit 13 (e.g. brake servo) to be actuated by the pedal.

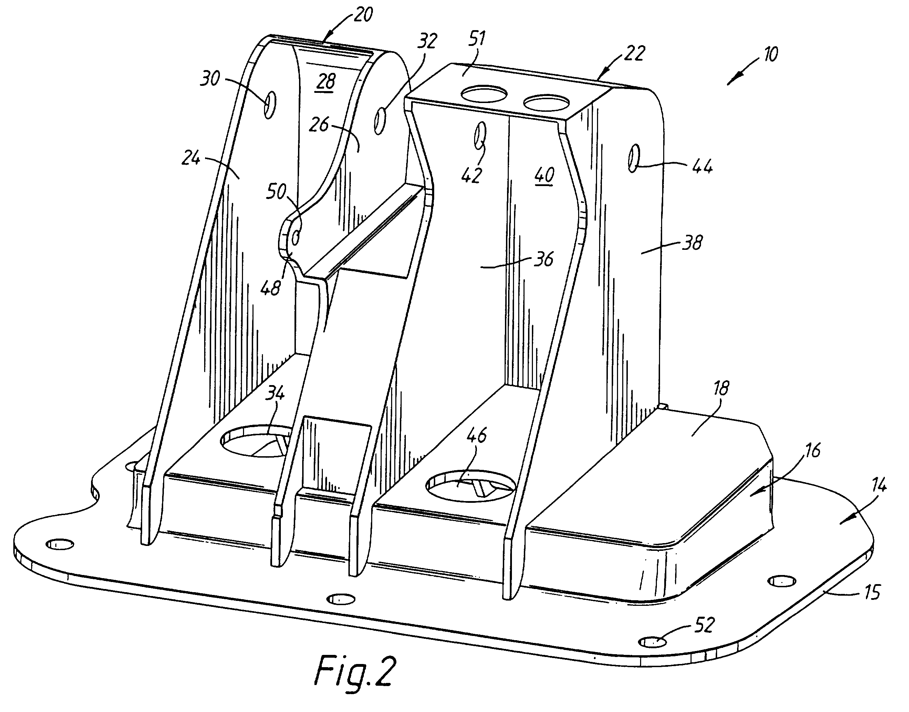

Figure 2 shows the upper part 10 of the support. This part comprises a base 14 defining a flange 15 surrounding a shallow box 16; the under face of this box is open. On the closed upper face 18 of the box are mounted a clutch pedal supporting bracket 20 and a brake pedal supporting bracket 22. Bracket 20 comprises two side walls 24,26 and a rear wall 28. The upper parts of the side walls 24,26 are formed with through bores 30 and 32 for receiving a bearing pin on which the clutch pedal is pivotally mounted. The operating rod of the clutch pedal passes through a hole 34 formed in the upper face 18 of the box 16.

The brake pedal supporting bracket 22 is similarly constructed, with side walls 36 and 38 and a rear wall 40, the side walls 36 and 38 having through bores 42 and 44 for supporting a bearing plate for the brake pedal. The operating rod of the brake pedal passes through a hole 46 formed in the upper face 18 of the box 16.

Each of the brackets 20 and 22 is strengthened by means of integral ribs. The bracket 20 may be provided with an integral tab 48 having a hole 50 for receiving one end of a compensation spring, the other end of which is attached to the clutch pedal. The brake pedal support bracket 22 may be provided with a similar tab 51 for supporting one or more electrical switches responsive to the position of the brake pedal such as for controlling the vehicle's stop lights and cruise control.

The surrounding flange 14 is provided with holes 52 which are used for securing the upper and lower support parts together.

The support part 10 shown in Figure 2 is integrally moulded from suitable plastics material. The material used may, for example, be polyamide filled with 30% glass fibres. It must have sufficient mechanical strength and, of course, the ability to withstand the temperatures (e.g. up to 70°C) and other environmental effects likely to exist in use within the passenger compartment.

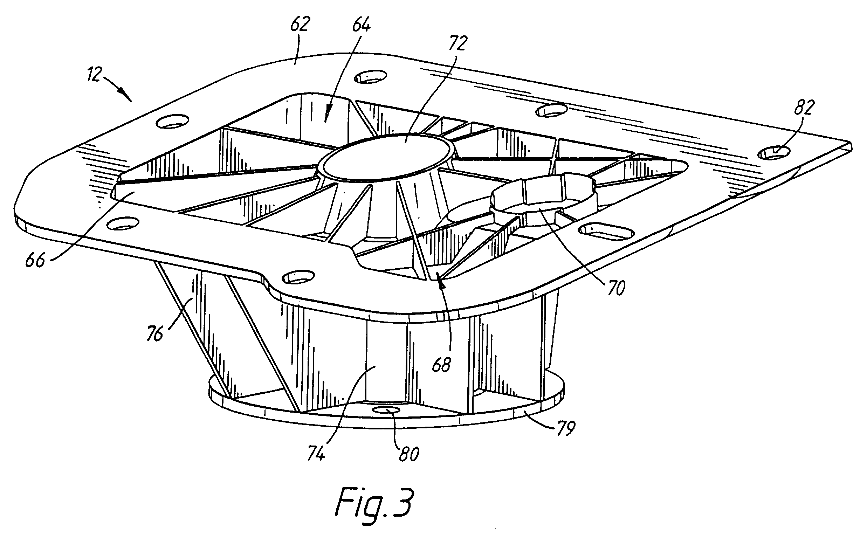

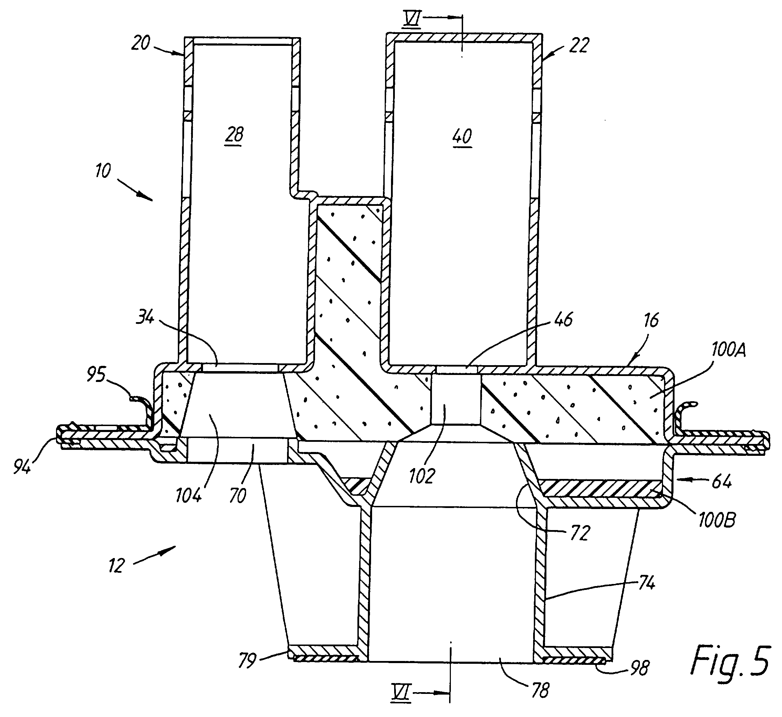

Figure 3 shows the lower part 12 of the support, that is, the support mounted on the bulkhead wall 4 (Figure 1) of the vehicle so as to be within the vehicle's engine compartment 8. The support part 12 defines a flange 62 surrounding a hollow box 64, the upper face 66 of which is open, its lower face 68 being closed. Ribs 67 support an integral ring 70 in a position matching the hole 34 in the upper part 10 of the support (see Fig. 2). In addition, the ribs support a ring 72 which extends downwardly as an enlarged tube 74 which extends from the underside (as viewed in Figure 3) of the support part 12 and is strengthened by further ribs 76. The tube 74 has a central hole 78 (see Figure 5) aligned with the ring 72. The tube 74 has a flange 79 which supports the servo mechanism (not shown) for the brakes by means of holes 80.

Holes 82 are formed in the surrounding flange 62 for securing the upper and lower support parts 10,12 together as will be described below.

The transmitter part of the hydraulic actuating mechanism for the clutch may be secured to the under face 68 of the box 64, in alignment with the hole 70.

The lower support part 12, being positioned within the engine compartment, must be moulded from material which is able to withstand the relatively high temperatures (up to 110°C, for example) and other adverse environmental conditions in the vehicle's engine compartment. A suitable material is polyamide filled with 50% glass fibres.

Figure 7 shows how the upper support part 10 and the lower support part 12 are mounted within an opening 84 formed for this purpose on the bulkhead wall 4 between the passenger compartment 6 and the engine compartment 8. The flange parts 15 and 62 are first brought together so that the fixing holes 52 and 82 are aligned with each other. Metal inserts 92 are forcibly fixed within the aligned holes for receiving screws or other suitable fixtures which hold the two parts together. The metal inserts 92 ensure that the torque applied to the fixtures during the assembly process does not damage the material of the support parts. The assembled support parts are then placed against the bulkhead wall 4, around the opening 84, and secured in position by means of the screws or other fixtures passing through the inserts 92, the screws or other fixtures being secured to the bulkhead wall by welding. A peripheral seal 94 is mounted on the flange 15 of the upper support part 10 and provides a seal not only between the upper and lower support parts but also against the bulkhead wall 4. The seal 94 may be moulded separately from suitable elastic material and applied to the upper support part 10. Instead, it could be over-moulded onto the flange 15 or extruded onto it, such as used in suitable foam material. The seal 94 carries a "cosmetic lip" 95 for overlapping the edge of the insulating material 96 carried by the bulkhead wall 4 where it is cut away at the opening 84.

Figure 8 shows part of the flange 79 around the tube 74 on the underside of the lower support part 12 (see also Figure 3). Figure 8 shows how the holes 80 in the flange 79 may be force-fitted with metal inserts 97 for receiving fixing screws. A suitable peripheral seal 98 may be mounted on the collar and secured in position by flexible clips 102 (see Figure 9). This seal 98 provides a suitable seal between the collar 74 and the brake servo unit (not shown).

According to an important feature of the pedal support, the hollow interior of the assembled support, formed by the two open-faced boxes 16 and 64 which are brought together in the assembled support, is filled or substantially filled with suitable sound insulating material as shown at 100 in Figure 5. For example, foamed polyurethane material may be used. Because the support is made in two parts, each of the open-faced boxes may be filled with different sound insulating material according to the respective sound insulating requirements. Thus, the box 16 of the upper support part 10 could be filled with foamed polyurethane material 100A while the box 64 in the lower support part 60 could be filled with high density polyurethane 100B.

The sound insulating material 100 is introduced into the boxes 16 and 64 during the manufacturing process and the upper and lower support parts 10 and 60 are then brought together and held in position such as by suitable clips or adhesive, ready for transport and storage.

The upper and lower parts may be secured together in this way before the insulating material 100 is placed in position, the material being inserted by injection.

As shown at 102 and 104 in Figure 5, spaces are provided extending through the insulating material 100 to allow passage of the brake and clutch operating rods. The spaces may be produced by means of pins or formers which are placed in the boxes 16 and 64 when the insulating material is injected, and then removed.

Because the pedal support is made in two parts, one of which will in use be positioned within the passenger compartment and the other in the engine compartment, each part can be produced from a different material which is specifically adapted for the condition to which it will be subjected. Thus, the lower part 12, being positioned within the engine compartment in use, will have to withstand relatively high temperatures and difficult environmental conditions. This is not the case for the upper part 10 which can therefore be made from less costly material. The overall cost of the pedal support can therefore be less than would be the case if it were made in one piece.

The hollow construction of the pedal support enables it to be filled with sound insulating material. Therefore, its insertion in the bulkhead wall of the vehicle between the engine compartment and the passenger compartment does not reduce the overall sound insulation between these two compartments. Furthermore, because the pedal support is in two parts, each can use sound insulating material adapted for the conditions appropriate to the position in which it will be mounted.

It will be appreciated that the particular constructional forms shown in the Figures are purely by way of example; modifications can be made according to the particular requirements of each installation.

## Claims

1. A support for mounting at least one control pedal (11), characterised in that the support is made in two parts (10,12) from plastics material, the first part (10) carrying pedal supporting means (20,22) for movably supporting the control pedal(11), the two parts (10,12) being adapted to be secured together and on a mount (4).

2. A support according to claim 1, characterised in that the two parts (10,12) when secured together define a hollow chamber (16,64) for receiving insulating material (100).

3. A support according to claim 2, characterised in that each part (10,12) defines an integral open-faced box (16,64), the open faces of the two boxes (16,64) being brought together when the two parts (10,12) are secured together so that the boxes (16,64) together define the hollow chamber.

4. A support according to claim 3, characterised in that the sound insulating material (100) comprises material of a first type in one open-faced box (16) and material of a second type in the other open-faced box (64).

5. A support according to any preceding claim, characterised in that each part (10,12) defines a through hole (34,70;46,102), the holes (34,70;46,102) being aligned when the parts (10,12) are secured together for receiving a control rod which extends from a control pedal (11) mounted on the pedal supporting means, through the two parts (10,12) and beyond the second one thereof.

6. A support according to claim 3 or 4, characterised by a hole (34,70;46,102) through the face of each box (16,64) opposite to its open face, the two holes (34,70;46.102) being aligned when the parts (10,12) are secured together for receiving a control rod which extends from a control pedal (11) mounted on the pedal supporting means, through the two parts (10,12) and beyond the second one thereof.

7. A support according to any preceding claim, characterised in that the plastics material of the first part (10) is different from the plastics material of the other or second part (12).

8. A support according to any preceding claim, for use where the mount is a wall or panel (4) formed with an opening for receiving the support, the support being provided with peripherally mounted fixing means (52) for securing the support in the opening.

9. A support according to claim 8, characterised in that the wall (4) is a wall between the passenger compartment (6) and the engine compartment (8) of a motor vehicle.

10. A support according to claim 8 or 9, characterised by sealing means (94) carried by the support for sealing between the periphery of the support and the periphery of the opening.

11. A support according to any preceding claim, characterised by sealing means (94) for sealing between the two parts.

12. A support according to any preceding claim, characterised in that the other or second support part (12) integrally carries mounting means for receiving control means to be actuated by the control rod.
